# EUROPEAN PATENT APPLICATION

(11) **EP 4 807 654 A1**
(43) Date of publication of application: **16.09.2026**
(21) Application number: 26160275.9
(22) Date of filing: 24.02.2026
(51) Int. Cl.: G06Q 30/0251

(54) **ADVERTISING TRANSMISSION CONTROL DEVICE, COMMUNICATION SYSTEM, ADVERTISING TRANSMISSION CONTROL METHOD, AND CARRIER MEDIUM**

(30) Priority: 12.03.2025 JP 2025039692; 17.12.2025 JP 2025260630
(71) Applicant: Ricoh Company, Ltd., Tokyo 143-8555 (JP)
(72) Inventor: MOROHOSHI, Hiroshi, Tokyo, 143-8555 (JP)
(74) Representative: SSM Sandmair

(57) **Abstract**

An advertising transmission control device for controlling transmission of advertising data related to advertising content includes a user identification information reception unit (51), a vehicle identification information reception unit (51), a user attribute information acquisition unit (51), a content information acquisition unit (51), and an advertising content transmission unit (51). The user identification information reception unit (51) receives user identification information for identifying a user. The user identification information is transmitted from a user identification information acquisition device that acquires the user identification information from a user terminal. The vehicle identification information reception unit (51) receives vehicle identification information for identifying a vehicle on which the user corresponding to the user identification information received by the user identification information reception unit (51) is located. The user attribute information acquisition unit (51) acquires user attribute information corresponding to the user identification information received by the user identification information reception unit (51) from a user information management device that stores the user identification information in association with the user attribute information indicating an attribute of the user. The content information acquisition unit (51) acquires content identification information related to the user attribute information acquired by the user attribute information acquisition unit (51), from an advertising information management device that stores the content identification information for identifying the advertising content in association with user attribute information of a target recipient for each advertising content. The advertising content transmission unit (51) transmits the advertising data related to the advertising content to a display control device of the vehicle identified by the vehicle identification information received by the vehicle identification information reception unit (51). The advertising content is identified by the content identification information acquired by the content information acquisition unit (51).

## Description

### BACKGROUND

### Technical Field

The present disclosure relates to a technique for displaying advertisements appropriate for passenger attributes on monitors installed in vehicles such as public transportation, and particularly relates to an advertising transmission control device, a communication system, an advertising transmission control method, and a carrier medium.

### Related Art

Currently, a business model has been developed in which advertising content, such as videos or still images, is displayed on monitors inside trains, and a certain advertising fee is received from advertisers.

In the case of television advertising, the viewing rate is calculated using data from audience rating measurement devices installed at random in households nationwide. In contrast, for advertisements inside trains, the number of viewers is estimated based on the passenger density within the train.

As a method for measuring passenger density, it has been proposed to transmit short-wavelength electromagnetic waves toward the windows of a moving train from the lateral side, receive the electromagnetic waves that enter the train through the windows, attenuated by the window glass and passengers, and exit through the opposite windows, and then calculate the boarding rate (degree of congestion) based on the attenuation ratio of the electromagnetic waves between transmission and reception (see Japanese Unexamined Patent Application Publication No. H05-330428).

However, even when the boarding rate is calculated by such prior methods, passengers of public transportation and other vehicles increasingly tend to focus on their own smartphones. As a result, when the advertising content inside the vehicle does not align with the interests of the passengers, they are unlikely to pay attention to the advertisement. Consequently, even if the number of viewers is estimated based on factors such as the boarding rate, the effectiveness of the advertisement in terms of return on investment remains uncertain from the advertiser's perspective.

### SUMMARY

The present disclosure described herein provides an advertising transmission control device for controlling transmission of advertising data related to advertising content. The device includes a user identification information reception unit, a vehicle identification information reception unit, a user attribute information acquisition unit, a content information acquisition unit, and an advertising content transmission unit. The user identification information reception unit receives user identification information for identifying a user. The user identification information is transmitted from a user identification information acquisition device that acquires the user identification information from a user terminal. The vehicle identification information reception unit receives vehicle identification information for identifying a vehicle on which the user corresponding to the user identification information received by the user identification information reception unit is located. The user attribute information acquisition unit acquires user attribute information corresponding to the user identification information received by the user identification information reception unit from a user information management device that stores the user identification information in association with the user attribute information indicating an attribute of the user. The content information acquisition unit acquires content identification information related to the user attribute information acquired by the user attribute information acquisition unit, from an advertising information management device that stores the content identification information for identifying the advertising content in association with user attribute information of a target recipient for each advertising content. The advertising content transmission unit transmits the advertising data related to the advertising content to a display control device of the vehicle identified by the vehicle identification information received by the vehicle identification information reception unit. The advertising content is identified by the content identification information acquired by the content information acquisition unit.

The present disclosure described herein provides a communication system including the advertising transmission control device and the user terminal of the user to communicate with the advertising transmission control device. The user terminal is installed with an application.

The present disclosure described herein provides a communication system including a user terminal of a user, a display control device that displays advertising content on a display of a vehicle, and an advertisement transmission system that causes the display control device to perform control to display the advertising content. The advertisement transmission system includes a user information management unit, an advertising information management unit, a user identification information reception unit, a vehicle identification information reception unit, a user attribute information acquisition unit, a content information acquisition unit, and an advertising content transmission unit. The user information management unit stores user identification information for identifying the user in association with user attribute information indicating an attribute of the user. The advertising information management unit stores content identification information for identifying the advertising content in association with user attribute information of a target recipient for each advertising content. The user identification information reception unit receives the user identification information from a user information acquisition device that acquires user information. The vehicle identification information reception unit receives vehicle identification information for identifying the vehicle on which the user corresponding to the user identification information received by the user identification information reception unit is located. The user attribute information acquisition unit acquires the user attribute information corresponding to the user identification information received by the user identification information reception unit from the user information management unit that stores the user identification information in association with the user attribute information for each user. The content information acquisition unit acquires, from the advertising information management unit, the content identification information related to the user attribute information acquired by the user attribute information acquisition unit. The advertising content transmission unit transmits advertising data related to the advertising content to the display control device of the vehicle identified by the vehicle identification information received by the vehicle identification information reception unit. The advertising content is identified by the content identification information acquired by the content information acquisition unit. The display control device includes a display control unit that displays the advertising content on the display.

The present disclosure described herein provides an advertising transmission control method executed by a computer that controls transmission of advertising data related to advertising content. The method includes receiving user identification information for identifying a user, the user identification information being transmitted from a user identification information acquisition device that acquires the user identification information; receiving vehicle identification information for identifying a vehicle on which the user corresponding to the user identification information is located; acquiring user attribute information corresponding to the user identification information from a user information management device that stores the user identification information in association with the user attribute information indicating an attribute of the user; acquiring content identification information related to the user attribute information from an advertising information management device that stores the content identification information for identifying the advertising content in association with user attribute information of a target recipient for each advertising content; and transmitting the advertising data related to the advertising content identified by the content identification information to a display control device of the vehicle identified by the vehicle identification information.

The present disclosure described herein provides a carrier medium carrying computer-readable code for controlling a computer system to carry out the advertising transmission control method.

Accordingly, the effectiveness of advertisements in terms of return on investment in a vehicle is enhanced more than before by increasing opportunities for passengers to view advertising content in the vehicle even when the effectiveness of the advertisement in terms of return on investment remains uncertain.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram of a communication system;
FIG. 2 is a block diagram illustrating a hardware configuration of a user terminal;
FIG. 3 is a block diagram illustrating a hardware configuration of an advertising transmission control device;
FIG. 4 is a block diagram illustrating a functional configuration of each device included in a communication system;
FIG. 5 is a conceptual diagram illustrating an initial state of an advertising transmission information management table;
FIG. 6 is a conceptual diagram illustrating a performance management table;
FIG. 7 is a conceptual diagram illustrating a user information management table;
FIG. 8 is a conceptual diagram illustrating an operation information management table;
FIG. 9 is a conceptual diagram illustrating an advertising information management table;
FIG. 10 is a sequence diagram illustrating a process from when a user passes through an automatic ticket gate at a departure station to when an advertising transmission control device acquires user information;
FIG. 11 is a sequence diagram illustrating a process for an advertising transmission device to prepare for transmitting advertising data related to advertising content to a display control device at a predetermined time;
FIG. 12 is a diagram illustrating an advertising transmission information management table storing additional information including a transmission time of advertising data related to advertising content, a transmission destination of the advertising data and a vehicle interior area, and a content number;
FIG. 13 is a sequence diagram illustrating a process in which advertising content is displayed and a user terminal responds to indicate that the user has viewed the advertising content and empathized with the advertising content;
FIG. 14A is a diagram illustrating a monitor located at a predetermined position inside a train, the monitor displaying advertising content;
FIG. 14B is a diagram illustrating an advertising transmission information management table storing an additional indicator denoting that the advertising content of FIG. 14A has been displayed;
FIG. 15A is a diagram illustrating a screen of a user terminal for inquiring whether the user has viewed advertising content;
FIG. 15B is a diagram illustrating an advertising transmission information management table storing an additional indicator denoting that the advertising content of FIG. 15A has been viewed;
FIG. 16A is a diagram illustrating a screen of a user terminal indicating that the user has pressed an empathy button;
FIG. 16B is a diagram illustrating an advertising transmission information management table storing an additional indicator denoting that the user has empathized with advertising content; and
FIG. 17 is a sequence diagram illustrating a process for an advertising transmission control device to store performance data of display, viewing, and empathy of advertising content after a user passes through an automatic ticket gate at a destination.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below.

As used herein, the singular forms "a," "an," and "the" are intended to include the plural forms as well, unless the context clearly indicates otherwise.

For the sake of simplicity, identical or similar reference numerals denote identical or similar elements such as parts and materials having the same functions, and redundant descriptions thereof are omitted unless otherwise required.

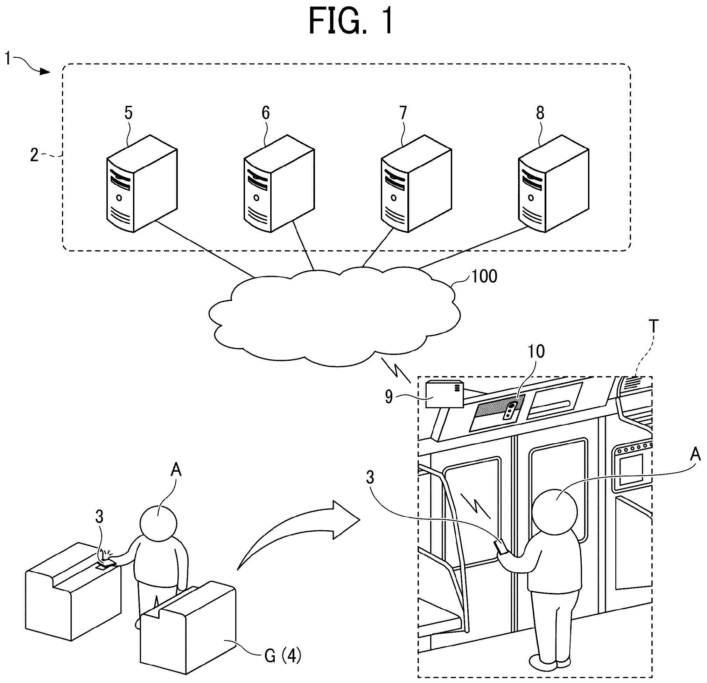

Embodiments of the present disclosure are described below with reference to FIGS. 1 to 17.

### Overall Configuration of Communication System

An overall configuration of a communication system 1 is described below with reference to FIG. 1. FIG. 1 is a schematic diagram of the communication system 1. A case where an electric train T (or train T) is used is described below as an example of a case where an unspecified number of people use a public transportation vehicle.

FIG. 1 illustrates a situation when a user A passes through an automatic ticket gate G at a station while holding a user terminal 3 of the user A over the automatic ticket gate G and boards the train T, where a display control device 9 located inside the train T displays advertising content related to the user A on a monitor 10 nearest to the user A. The monitor 10 is an example of a display. The monitor 10 displays advertising content based on advertising data representing information in image, video, audio, text formats, or combinations thereof. The "advertising content" refers to content forming an expression of an advertisement that is displayed or reproduced on the monitor 10.

The communication system 1 includes an advertising transmission system 2, the user terminal 3 (including a dedicated application), the automatic ticket gate G, and the display control device 9.

The advertising transmission system 2 includes an advertising transmission control device 5, a user information management device 6, an operation information management device 7, and an advertising information management device 8. The advertising transmission system 2 manages (stores) information related to advertising content, and transmits advertising data related to advertising content, that is, the data of advertising content, to the display control device 9. The advertising transmission control device 5 communicates with the automatic ticket gate G (including a ticket gate control device 4), the user information management device 6, the operation information management device 7, the advertising information management device 8, and the display control device 9 via a communication network 100 such as the Internet or a local area network (LAN).

The user terminal 3 is, for example, a smartphone, a mobile phone, or a tablet terminal. A dedicated application installed on the user terminal 3 enables automatic payment of a boarding fare upon reading by the automatic ticket gate G and communication with the advertising transmission control device 5. The dedicated application may be referred to simply as "application" in the following description.

The automatic ticket gate G includes a door, an assembly to open and close the door, a sensor to detect a user passing through a ticket gate passage, and the ticket gate control device 4 to control such components. The ticket gate control device 4, serving an example of a user information acquisition device, reads a user identification (ID), which is an example of user identification information for identifying a user, from the user terminal 3 and transmits the user ID to the advertising transmission control device 5.

To cause the advertising content related to the user A to be displayed on the nearest monitor 10 to the user A who has boarded the train T, the advertising transmission control device 5 transmits advertising data related to the advertising content to the display control device 9. The monitor 10 may be a predetermined monitor nearest to the location of the user A in the train T, or include all monitors in all cars of the train T or all monitors in a predetermined car of the train T.

The user information management device 6 manages (stores) user information including attribute information indicating attributes such as names of users registered in advance.

The operation information management device 7 manages (stores) operation information indicating an operation plan of each train.

The advertising information management device 8 manages (stores) advertising information indicating when advertising data related to which advertising content is transmitted to a user (target recipient) of which attribute in which area (for example, between a station X and a station Y).

The display control device 9 is installed in each train, and performs control to display advertising content related to advertising data received from the advertising transmission control device 5 on the monitor 10. The display control device 9 may be installed in each train T, in each car of the train T, or near each door for each number of doors of the car.

### Hardware Configuration

### Hardware Configuration of User Terminal

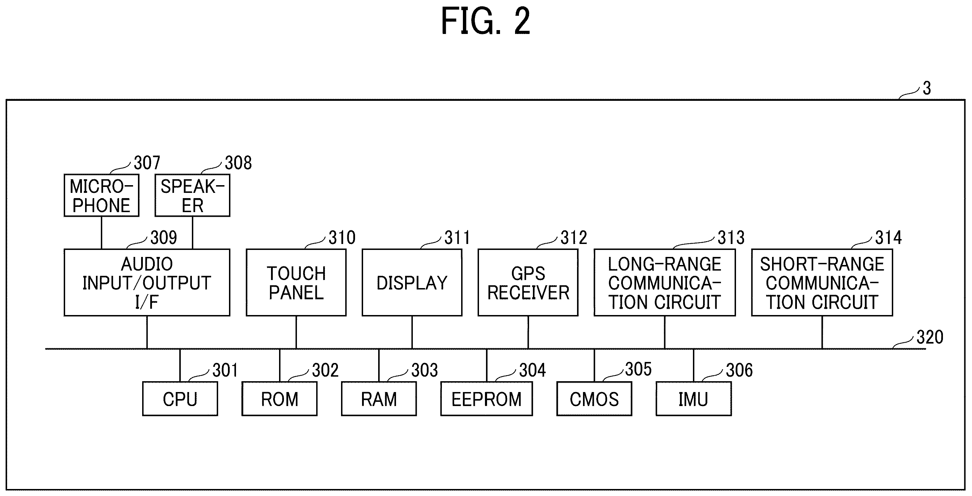

An electric hardware configuration of the user terminal 3 is described below with reference to FIG. 2. FIG. 2 is a block diagram illustrating an electric hardware configuration of the user terminal 3.

As illustrated in FIG. 2, the user terminal 3 includes, as a computer, a central processing unit (CPU) 301, a read-only memory (ROM) 302, a random-access memory (RAM) 303, an electrically erasable programmable read-only memory (EEPROM) 304, a complementary metal oxide semiconductor (CMOS) sensor 305, and an inertial measurement unit (IMU) 306.

The CPU 301 controls the overall operation of the user terminal 3. The ROM 302 stores programs, for example, a program used by the CPU 301 and an initial program loader (IPL) for booting the CPU 301.

The RAM 303 is used as a work area for the CPU 301. The EEPROM 304 reads or writes various data such as a program for a user terminal under the control of the CPU 301.

The CMOS sensor 305 is an example of a built-in imaging device that captures an image of a subject or a similar object under the control of the CPU 301 to obtain image data. Instead of the CMOS sensor, an imaging device such as a charge-coupled device (CCD) sensor may be used.

The IMU 306 includes an accelerometer and an angular velocity (gyro) sensor. The accelerometer detects translational motion, and the angular velocity sensor detects rotational motion.

The user terminal 3 further includes a microphone 307, a speaker 308, an audio input/output interface (I/F) 309, a touch panel 310, a display 311, a Global Positioning System (GPS) receiver 312, a long-range communication circuit 313, and a short-range communication circuit 314.

The microphone 307 is a built-in circuit that converts sound into electrical signals. The speaker 308 is a built-in circuit that converts electrical signals into physical vibration to produce sound such as music or voice. The audio input/output I/F 309 is a circuit that processes the input and output of audio signals between the microphone 307 and the speaker 308 under the control of the CPU 301. The touch panel 310 is an example of an input device that allows a user to operate the user terminal 3 by touching or pressing a screen of the display 311. The display 311 is an example of a display that displays images of subjects and various icons, and may be, for example, a liquid crystal display (LCD) or an organic electroluminescent display. The GPS receiver 312 receives GPS signals from GPS satellites.

The long-range communication circuit 313 communicates with other devices and servers via the communication network 100 such as the Internet or a LAN.

The short-range communication circuit 314 communicates with external terminals (apparatuses) by using short-range wireless communication technologies such as near-field communication (NFC), Bluetooth^{®}, or Wi-Fi.

The user terminal 3 further includes a bus line 320. The bus line 320 is, for example, an address bus or a data bus that electrically connects the components illustrated in FIG. 2, such as the CPU 301.

### Hardware Configuration of Advertising Transmission Control Device

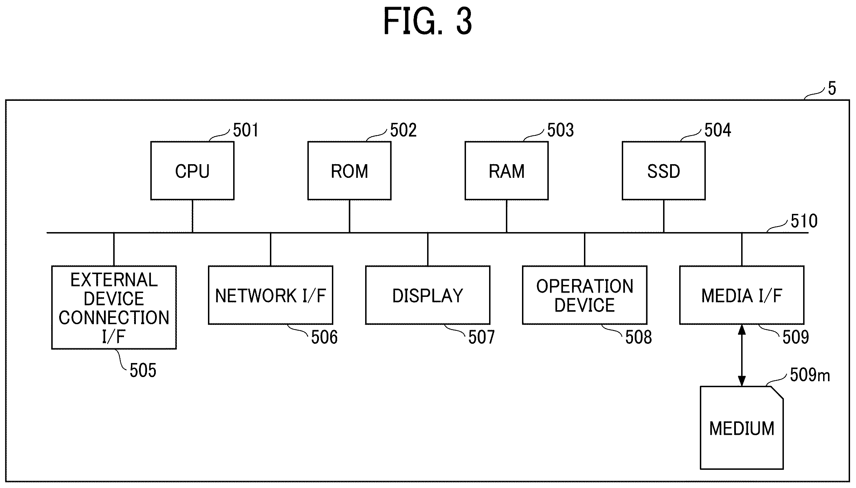

A hardware configuration of the advertising transmission control device 5 is described below with reference to FIG. 3. FIG. 3 is a block diagram illustrating a hardware configuration of the advertising transmission control device 5.

As illustrated in FIG. 3, the communication control device 5 includes, as a computer, a CPU 501, a ROM 502, a RAM 503, a solid-state drive (SSD) 504, an external device connection I/F 505, a network I/F 506, a display 507, an operation device 508, a media I/F 509, and a bus line 510.

The CPU 501 controls the overall operation of the advertising transmission control device 5. The ROM 502 stores programs such as an IPL for booting the CPU 501. The RAM 503 is used as a work area for the CPU 501.

The SSD 504 reads or writes various data under the control of the CPU 501. The advertising transmission control device 5 may include a hard disk drive (HDD) in place of the SSD 504.

The external device connection I/F 505 is an interface for connection with various external devices. Examples of the external devices in this case include, but are not limited to, a display, a speaker, a keyboard, a mouse, a universal serial bus (USB) memory, and a printer.

The network I/F 506 is an interface for data communication via the communication network 100.

The display 507 is an example of a display unit that displays various images, and may be, for example, an LCD or an organic electroluminescent display.

The operation device 508 is an input unit for performing operations such as selecting and executing instructions, selecting processing targets, and moving a cursor, and includes various operation buttons, a power switch, a shutter button, and a touch panel.

The media I/F 509 controls the reading of data from, or the writing (storing) of data to in), a recording medium 509m such as a flash memory. Examples of the recording medium 509m include, but are not limited to, a digital versatile disc (DVD) and a Blu-ray Disc^{®}.

The bus line 510 is, for example, an address bus or a data bus that electrically connects the components such as the CPU 501.

The ticket gate control device 4, the user information management device 6, the operation information management device 7, the advertising information management device 8, and the display control device 9 have substantially the same hardware configurations as the advertising transmission control device 5, and thus the description of each will be omitted.

### Functional Configuration of Communication System

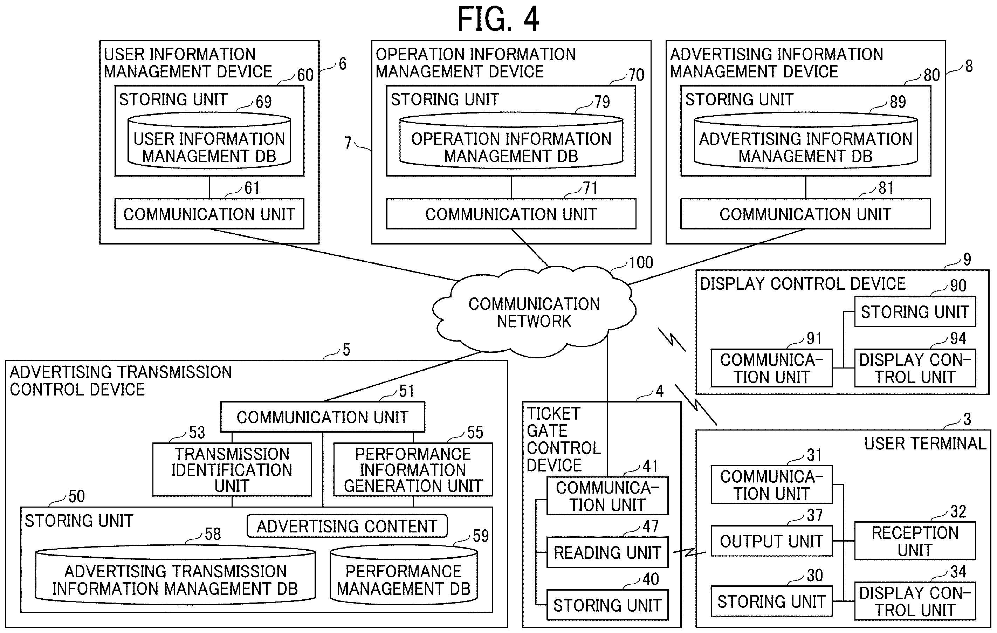

A functional configuration of each device included in the communication system 1 is described below with reference to FIG. 4. FIG. 4 is a block diagram illustrating a functional configuration of each device included in the communication system 1.

### Functional Configuration of User Terminal

The user terminal 3 includes a communication unit 31, a reception unit 32, a display control unit 34, and an output unit 37. Each of these units is a function or means implemented by any of the components illustrated in FIG. 2 operating in accordance with instructions from the CPU 301 based on a program deployed from the EEPROM 304 to the RAM 303. The user terminal 3 includes a storing unit 30 that is implemented by the RAM 303 or the EEPROM 304.

### Functional Units

The storing unit 30 stores a user ID for identifying a user of the user terminal 3.

The communication unit 31 performs data communication with the advertising transmission control device 5 via the communication network 100.

The reception unit 32 receives operation input from the user.

The display control unit 34 performs control for displaying various images on the display 311 of the user terminal 3.

The output unit 37 performs data communication with external devices, such as the ticket gate control device 4 and a Wi-Fi antenna inside the train T, by using short-range wireless communication technologies such as NFC, Bluetooth^{®}, or Wi-Fi.

### Functional Configuration of Ticket Gate Control Device

The ticket gate control device 4 includes a communication unit 41 and a reading unit 47. Each of these units is a function or means implemented by any of the components illustrated in FIG. 3 operating in accordance with instructions from the CPU 501 based on a program deployed from the SSD 504 to the RAM 503. The ticket gate control device 4 includes a storing unit 40 that is implemented by the RAM 503 or the SSD 504.

The storing unit 40 stores a station name for identifying a station. The station name may be replaced with a station ID for identifying a station.

### Functional Units

The communication unit 41 performs data communication with the advertising transmission control device 5 via the communication network 100.

The reading unit 47 reads the user ID stored in the user terminal 3 by short-range wireless communication with the output unit 37 of the user terminal 3. The reading unit 47 may read the user ID from an integrated circuit (IC) owned by the user, instead of the user terminal 3.

### Functional Configuration of Advertising Transmission Control Device

The advertising transmission control device 5 includes a communication unit 51, a transmission identification unit 53, and a performance information generation unit 55. Each of these units is a function or means implemented by any of the components illustrated in FIG. 3 operating in accordance with instructions from the CPU 501 based on a program deployed from the SSD 504 to the RAM 503. The advertising transmission control device 5 includes a storing unit 50 that is implemented by the RAM 503 or the SSD 504.

### Advertising Content

The storing unit 50 stores advertising data related to advertising content of each advertiser together with the corresponding content number.

### Advertising Transmission Information Management Table

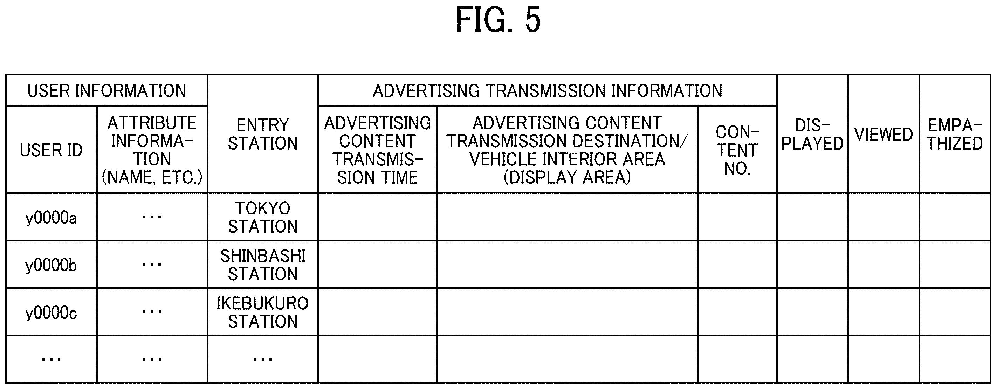

The storing unit 50 stores an advertising transmission information management database (DB) 58. The advertising transmission information management DB 58 includes an advertising transmission information management table having a data structure as illustrated in FIG. 5, and servers as an example of an advertising transmission information management unit. FIG. 5 is a conceptual diagram illustrating an initial state of the advertising transmission information management table.

As illustrated in FIG. 5, the advertising transmission information management table stores user information, an entry station, and advertising transmission information, along with indicators such as "displayed," "viewed," and "empathized," which respectively denote the display status, viewing status, and empathy status.

The "user information" includes a user ID for identifying a user and user attribute information indicating an attribute of the user identified by the user ID. The "user attribute information" refers to information indicating the user's name, gender, age, address, occupation, commuter pass section, and other details such as hobbies, interests, place of origin, and nickname.

The "entry station" indicates the name of a station that the user has entered.

The "advertising transmission information" includes a transmission time of advertising data related to advertising content, a transmission destination of the advertising data related to the advertising content and a vehicle interior area, such as an area in a train, as the transmission destination, and a content number of the advertising content related to the advertising data that is transmitted.

The "transmission time of advertising data related to advertising content" indicates the time at which advertising data related to advertising content is transmitted in step S52 described later.

The "transmission destination of the advertising data related to the advertising content" indicates a train (or train car) to which the advertising data related to the advertising content, such as "YY line, Departing at 9:00, Bound for Odawara" is transmitted.

The "vehicle interior area" indicates a partial area within the vehicle, such as a train, where the user is located, namely the user boarding area, and is used to identify the monitor 10 that displays the advertising content. The vehicle interior area may also be referred to as "advertising content display area."

The "content number" indicates the number for identifying the advertising content, and is an example of content identification information.

The "displayed" column indicates whether the advertising content indicated by the content number is displayed on the monitor 10.

The "viewed" column indicates whether the user indicated by the user ID has viewed the advertising content indicated by the content number and has made a response indicating that the advertising content has been viewed.

The "empathized" column indicates whether the user indicated by the user ID has viewed the advertising content indicated by the content number and has made a response indicating that the user has empathized with the advertising content.

### Performance Management Table

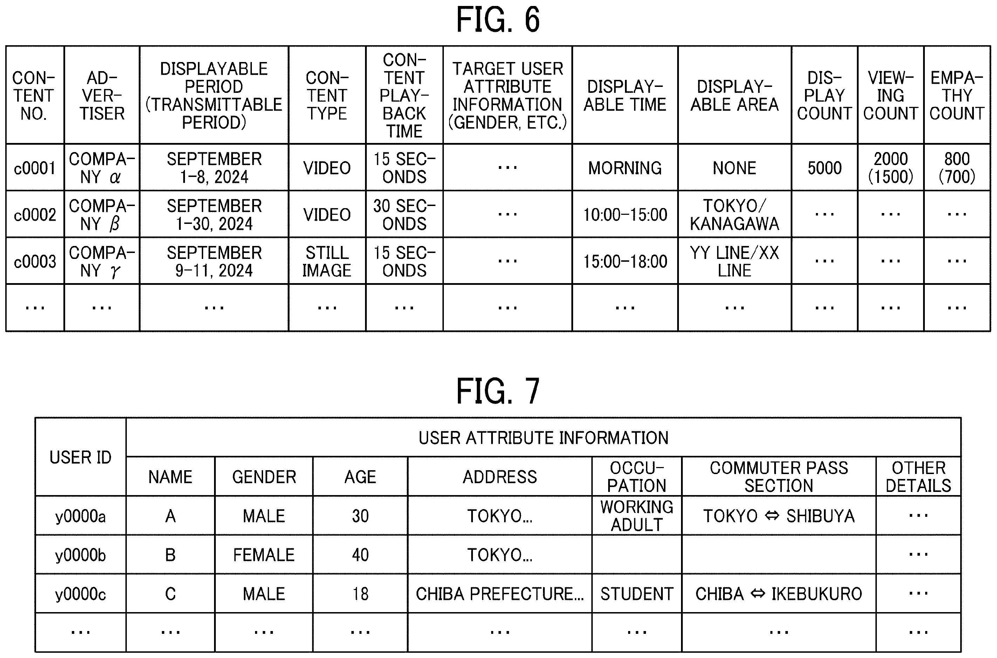

The storing unit 50 stores a performance management DB 59. The performance management DB 59 includes a performance management table having a data structure as illustrated in FIG. 6. FIG. 6 is a conceptual diagram illustrating the performance management table.

As illustrated in FIG. 6, the performance management table stores a content number, an advertiser, a displayable period (transmittable period), a content type, a content playback time, target user attribute information, a displayable time, a displayable area, a display count, a viewing count, and an empathy count in association with one another.

The "display (transmission) available period" indicates a period during which advertising content indicated by the content number is displayed (transmitted) on the monitor 10.

The "content type" indicates the type of advertising content such as video content or still image content.

The "content playback time" indicates the time during which the advertising content indicated by the content number is played back.

The "target user attribute information" indicates an attribute of a target user intended to view the advertising content indicated by the content number.

The "displayable time" indicates the time range during which the advertising content indicated by the content number can be displayed in the operation time of the train T.

The "displayable area" indicates an area where the advertising content indicated by the content number can be displayed among areas where the train T passes.

The "display count" indicates the total number of times the advertising content indicated by the content number is actually displayed.

The "viewing count" indicates the total number of times the user indicated by the user ID views the advertising content indicated by the content number and makes a response indicating that the advertising content has been viewed.

The "empathy count" indicates the total number of times the user indicated by the user ID views the advertising content indicated by the content number and makes a response indicating that the user has empathized with the advertising content.

### Functional Units

The communication unit 51 performs data communication with the user terminal 3, the ticket gate control device 4, the user information management device 6, the operation information management device 7, the advertising information management device 8, and the display control device 9 via the communication network 100.

The transmission identification unit 53 performs processing such as identifying a transmission time of advertising data related to advertising content, based on operation information acquired from the operation information management device 7 and advertising information acquired from the advertising information management device 8. A detailed description of the processing performed by the transmission identification unit 53 is described below with reference to steps S38, S39, and S51.

The performance information generation unit 55 generates performance information visualizing the effectiveness of advertisements in terms of return on investment based on the data stored in the performance management DB 59.

### User Information Management Device

The user information management device 6 includes a communication unit 61. This unit is a function or means implemented by any of the components illustrated in FIG. 3 operating in accordance with instructions from the CPU 501 based on a program deployed from the SSD 504 to the RAM 503. The user information management device 6 includes a storing unit 60 that is implemented by the RAM 503 or the SSD 504.

### User Information Management Table

The storing unit 60 stores a user information management DB 69. The user information management DB 69 includes a user information management table having a data structure as illustrated in FIG. 7, and serves as an example of a user information management unit. FIG. 7 is a conceptual diagram illustrating the user information management table.

As illustrated in FIG. 7, the user information management table stores a user ID in association with user attribute information. The user attribute information is similar to the user attribute information in the advertising transmission information management table, and thus the description thereof will be omitted.

### Functional Configurations

The communication unit 61 performs data communication with the advertising transmission control device 5 via the communication network 100.

### Operation Information Management Device

The information management apparatus 7 includes a communication unit 71. This unit is a function or means implemented by any of the components illustrated in FIG. 3 operating in accordance with instructions from the CPU 501 based on a program deployed from the SSD 504 to the RAM 503. The operation information management device 7 includes a storing unit 70 that is implemented by the RAM 503 or the SSD 504.

### Operation Information Management Table

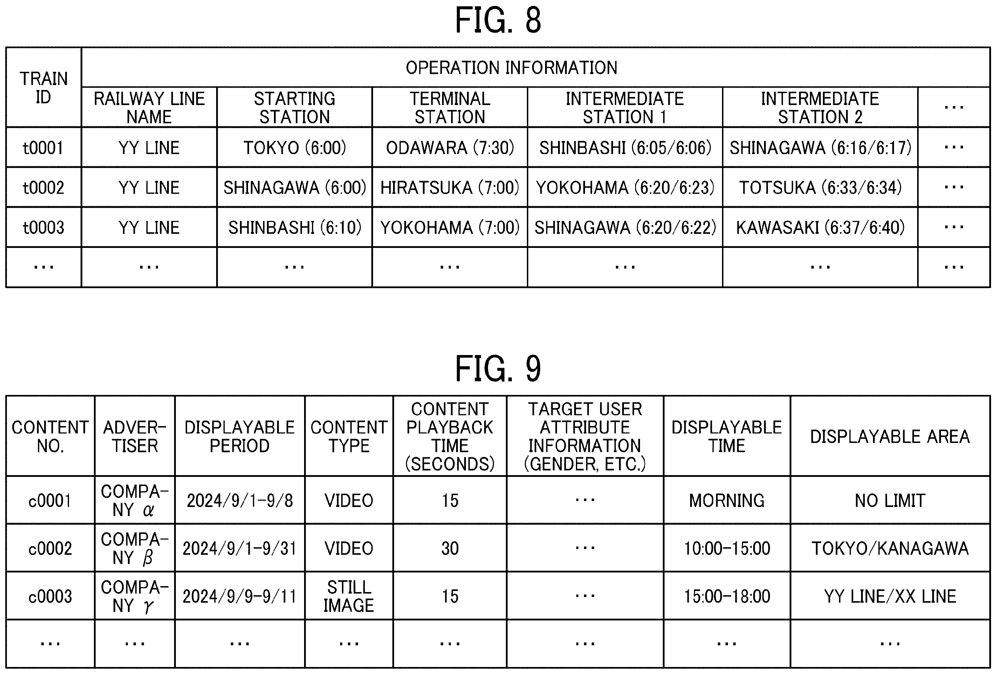

The storing unit 70 stores an operation information management DB 79. The operation information management DB 79 includes an operation information management table having a data structure as illustrated in FIG. 8. FIG. 8 is a conceptual diagram illustrating the operation information management table.

As illustrated in FIG. 8, the operation information management table stores a train ID for identifying a train in association with operation information of the train indicated by the train ID. The train ID is an example of vehicle identification information for identifying a vehicle.

The "operation information" indicates a railway line name, a starting station (scheduled departure time) and a terminal station (scheduled arrival time) of a train indicated by a train ID, and each intermediate station (scheduled arrival time, scheduled departure time) therebetween.

### Functional Configurations

The communication unit 71 performs data communication with the advertising transmission control device 5 via the communication network 100.

### Advertising Information Management Device

The advertising information management device 8 includes a communication unit 81. This unit is a function or means implemented by any of the components illustrated in FIG. 3 operating in accordance with instructions from the CPU 501 based on a program loaded from the SSD 504 to the RAM 503. The advertising information management device 8 includes a storing unit 80 that is implemented by the RAM 503 or the SSD 504.

### Advertising Information Management Table

The storing unit 80 stores an advertising information management DB 89. The advertising information management DB 89 includes an advertising information management table having a data structure as illustrated in FIG. 9. FIG. 9 is a conceptual diagram illustrating the advertising information management table.

As illustrated in FIG. 9, the advertising information management table stores a content number, an advertiser, a displayable period, a content type, a content playback time, target user attribute information, a displayable time, and a displayable area in association with one another. These items are similar to the items of the performance management table, and thus the description thereof will be omitted.

### Functional Configurations

The communication unit 81 performs data communication with the advertising transmission control device 5 via the communication network 100.

### Display Control Device

The display control device 9 includes a communication unit 91 and a display control unit 94. Each of these units is a function or means implemented by any of the components illustrated in FIG. 3 operating in accordance with instructions from the CPU 501 based on a program deployed from the SSD 504 to the RAM 503. The display control device 9 includes a storing unit 90 that is implemented by the RAM 503 or the SSD 504. The storing unit 90 stores antenna installation information associated with area information (communication area information) indicating a communication-available area (range) of each Wi-Fi antenna installed in the train T. Specifically, the area information indicates the periphery of a predetermined car (for example, Car 5) and a predetermined door (for example, the third door from the front) of the train T, and is used to identify an advertising content display area described later.

### Functional Units

The communication unit 91 performs data communication with the advertising transmission control device 5 via the communication network 100.

The display control unit 94 performs control to display advertising content received from the advertising transmission control device 5 on the monitor 10 as a predetermined monitor.

### Processes or Operations

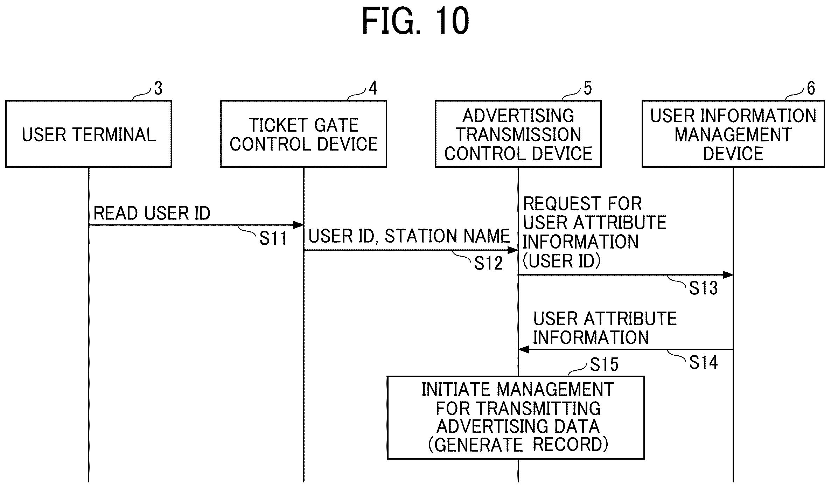

Example processes or operations are described below with reference to FIGS. 10 to 17.

### User Information Acquisition Process

Referring to FIG. 10, a description is given below of a process from when the user A passes through the automatic ticket gate G at a departure station to when the advertising transmission control device 5 acquires user information. FIG. 10 is a sequence diagram illustrating a process from when the user A passes through the automatic ticket gate G at the departure station to when the advertising transmission control device 5 acquires the user information.

When the user A holds the user terminal 3 over the automatic ticket gate G while passing through the automatic ticket gate G at the departure station, in step S11, the output unit 37 outputs the user ID of the user A through the application. Consequently, the reading unit 47 of the ticket gate control device 4 reads (acquires) the user ID.

In step S12, the communication unit 41 of the ticket gate control device 4 transmits the user ID read in step S11 to the advertising transmission control device 5 along with the information indicating the station name stored in the storing unit 40. Consequently, the communication unit 51 of the advertising transmission control device 5 receives the user ID and the information indicating the station name. Thus, the communication unit 51 serves as an example of a user identification information reception unit that receives user identification information.

In step S13, the communication unit 51 transmits a request for user attribute information to the user information management device 6. This request includes the user ID received in step S12. Consequently, the communication unit 61 of the user information management device 6 receives the request for user attribute information.

In step S14, the communication unit 61 of the user information management device 6 searches the user information management DB 69 with the user ID received in step S13 as a search key and retrieves the corresponding user attribute information. Then, the communication unit 61 transmits the user attribute information to the advertising transmission control device 5. Consequently, the communication unit 51 of the advertising transmission control device 5 receives (acquires) the user attribute information. Thus, the communication unit 51 serves as an example of a user attribute information acquisition unit that acquires user attribute information corresponding to user identification information.

In step S15, the communication unit 51 associates the user ID received in step S12, the user information based on the user attribution information received in step S14, and the entry station based on the station name received in step S12 with one another and generates a new record in the advertising transmission information management table as illustrated in FIG. 5, thus initiating management for transmitting advertising data related to advertising content to be viewed by the user who has passed through the automatic ticket gate G and entered the station.

### <Storage of Additional Information Including Transmission Time Of Advertising Data Related To Advertising Content, Transmission Destination Of Advertising Data And Advertising Content Display Area, And Content Number>

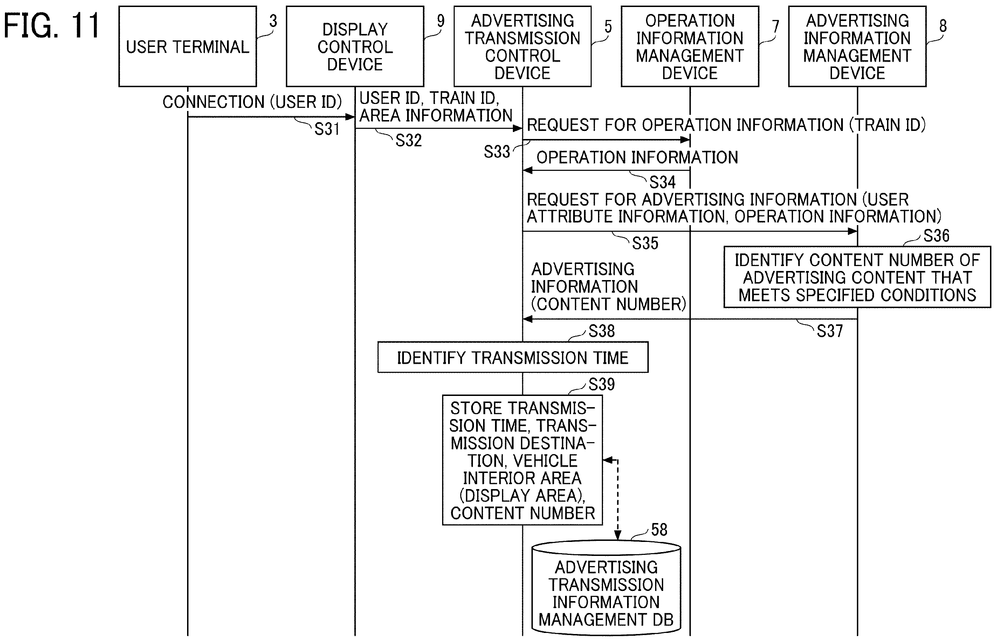

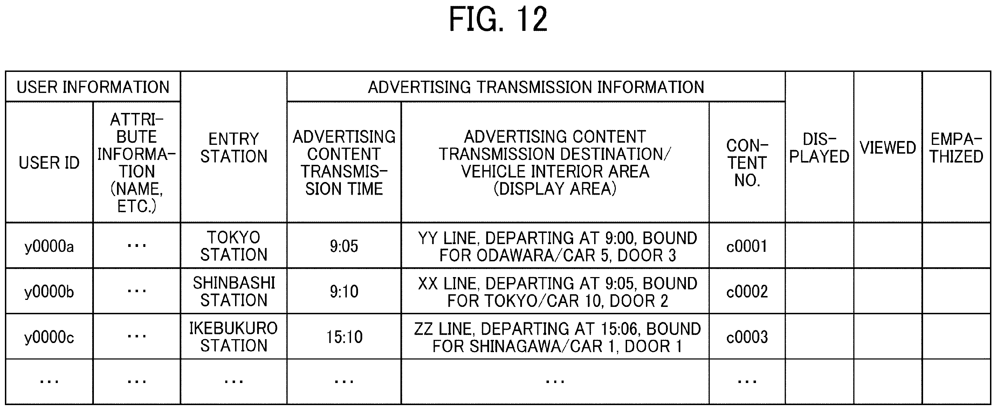

Referring to FIGS. 11 and 12, a description is given below of a process for the advertising transmission control device 5 to store additional information including the transmission time of advertising data related to advertising content, the transmission destination of the advertising data and the advertising content display area, and the content number in the advertising transmission information management table. FIG. 11 is a sequence diagram illustrating a process for the advertising transmission device 5 to prepare for transmitting advertising data related to advertising content to the display control device 9 at a predetermined time.

When the user A boards the train T from a car door of the train T, in step S31, the user terminal 3 is automatically connected to a Wi-Fi antenna nearest to the user A in the train T and the communication unit 31 transmits the user ID stored in the storing unit 30 to the display control device 9 via the Wi-Fi antenna. Consequently, the communication unit 91 of the display control device 9 retrieves area information corresponding to the Wi-Fi antenna as the transmission source and associated with the antenna installation information stored in the storing unit 90. By installing different Wi-Fi antennas for each door of the train T, the advertising transmission control device 5 can identify a car door near the user A based on the Wi-Fi antenna as the transmission source. The "area information" indicates, for example, "Car 5, Door 3," and also indicates an advertising content display area. Different Wi-Fi antennas may be installed for each car instead of each door, and the advertising transmission control device 5 may identify a car where the user has boarded and is located.

Instead of the user terminal 3 being automatically connected to a Wi-Fi antenna, the user A may use the user terminal 3 to scan a Quick Response Code^{®} (QR Code^{®})-for example, one indicated on a sticker affixed to the car door of the train T-so that the user terminal 3 is connected to the display control device 9 and enables data communication. In this case, the user terminal 3 may be directly connected to the advertising transmission control device 5.

In step S32, the communication unit 91 of the display control device 9 transmits the user ID received in step S31, the train ID stored in the storing unit 90, and the area information (communication area information) retrieved in step S31 to the advertising transmission control device 5. Consequently, the communication unit 51 of the advertising transmission control device 5 receives the user ID, the train ID and the area information. Thus, the communication unit 51 serves as an example of a vehicle identification information reception unit that receives vehicle identification information.

In step S33, the communication unit 51 transmits a request for operation information to the operation information management device 7. This request includes the train ID received in step S32. Consequently, the communication unit 71 of the user information management device 7 receives the request for operation information.

Step S13 may be performed between step S32 and step S33 based on the user ID received in step S32. In this case, the record generated in step S15 does not include the "attribute information" illustrated in FIG. 5. Instead, after step S32, the "attribute information" is included in the record generated in step S15.

In step S34, the communication unit 71 of the operation information management device 7 searches the operation information management DB 79 with the train ID received in step S33 as a search key and retrieves the corresponding operation information. Then, the communication unit 71 transmits the operation information to the advertising transmission control device 5. Consequently, the communication unit 51 of the advertising transmission control device 5 receives (acquires) the operation information. Thus, the communication unit 51 serves as an example of an operation information acquisition unit that acquires operation information.

In step S35, the communication unit 51 further transmits a request for advertising information that includes the content number to the advertising information management device 8. The request includes the user attribution information received in step S14 and the operation information received in step S34. Consequently, the communication unit 81 of the user information management device 8 receives the request for advertising information.

In step S36, the communication unit 81 of the advertising information management device 8 uses the advertising information management DB 89 to identify the content number of advertising content that meets conditions indicated by the user attribute information and the operation information received in step S35. For example, in the advertising information management DB 89, the content number of advertising content is identified that meets the conditions that today is included in the "displayable period" column, the user attribution information received in step S35 is included in the "target user attribution information" column, a time from the current time onward is included in the "displayable time" column, and intermediate stations at which the train stops after the current time in the operation information is included in the "displayable area" column.

In step S37, the communication unit 81 transmits advertising information, which is a record including the content number identified in step S36, to the advertising transmission control device 5. Consequently, the communication unit 51 of the advertising transmission control device 5 receives (acquires) the advertising information. Thus, the communication unit 51 serves as an example of a content information acquisition unit that acquires content identification information.

In step S38, the transmission identification unit 53 of the advertising transmission control device 5 identifies a transmission time of advertising data related to the advertising content based on the operation information received in step S34 and the advertising information received in step S37. Specifically, the transmission identification unit 53 refers to the operation information and identifies a time (time range) from the current time onward, the time satisfying both the conditions of being within the displayable time and within the displayable area in the advertising information, as the transmission time of the advertising data related to the advertising content. For example, when the current time is included in the "displayable time" and the current train location is before entering the "displayable area," the time when the train position enters the "displayable area" is identified as the transmission time. By contrast, when the current train location is included in the "displayable area" and the current time is before the "displayable time," the time when the current time is included in the "displayable time" is identified as the transmission time.

In step S39, the transmission identification unit 53 of the advertising transmission control device 5 stores (registers) the transmission time of the advertising data related to the advertising content identified in step S38 in the record generated in step S15, as illustrated in FIG. 12. The transmission identification unit 53 further stores (registers), in the record generated in step S15, a train (for example, YY Line, Departing at 9:00, Bound for Odawara) identified by a part of the operation information received in step S34 as the transmission destination of the advertising data related to the advertising content, along with the area information (for example, Car 5, Door 3) received in step S32 as an advertising content display area. The transmission identification unit 53 further stores (registers) the content number of the advertising content related to the advertising data received in step S37 in the record generated in step S 15.

For example, "Departing at 9:00" is identified by the transmission identification unit 53 based on the station name received in step S12 and the operation information received in step S34, or based on the current time and the operation information received in step S34.

Through the process described above, the advertising transmission information indicating when, where, and what is transmitted is added to the initial state of the advertising transmission information management table illustrated in FIG. 5, and thus the advertising transmission information is stored as in the advertising transmission information management table illustrated in FIG. 12.

### Process of Displaying Advertising Content and Responding To Indicate That User Has Viewed Advertising Content and Empathized with Advertising Content

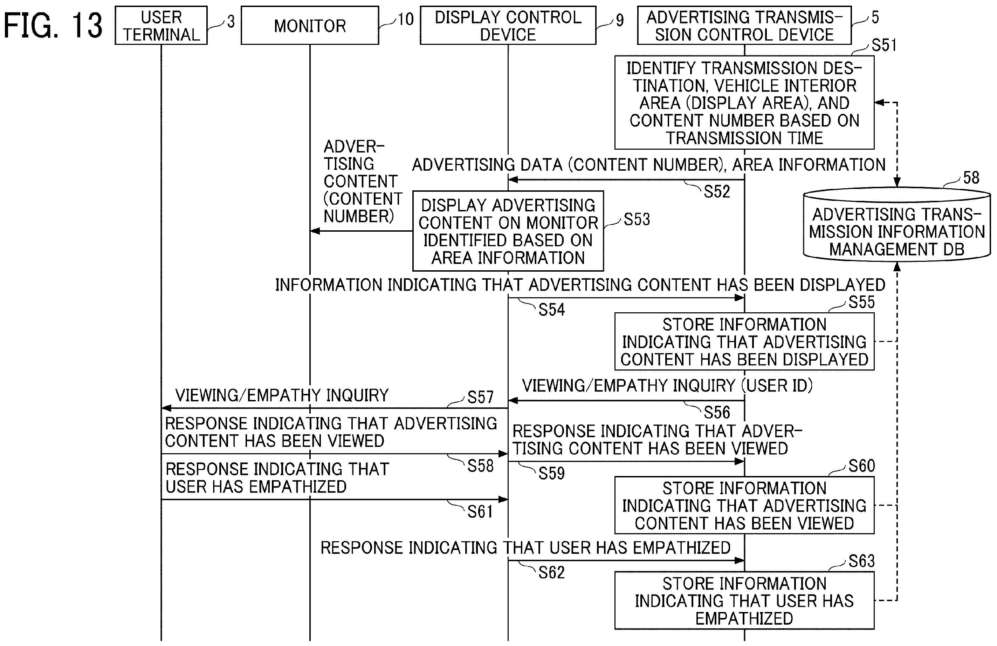

Referring to FIGS. 13 to 16, a description is given below of a process of displaying advertising content and responding to indicate that the user has viewed the advertising content and empathized with the advertising content. FIG. 13 is a sequence diagram illustrating a process in which advertising content is displayed and the user terminal 3 responds to indicate that the user has viewed the advertising content and empathized with the advertising content.

In step S51, the transmission identification unit 53 of the advertising transmission control device 5 refers to the advertising transmission information management DB 58 and identifies the transmission destination (for example, Line YY, Departing at 9:00, Bound for Odawara) of advertising data related to advertising content, the advertising content display area (for example, Car 5, Door 3) in the vehicle, and the content number (for example, c0001) of the advertising content, based on the transmission time that is several seconds after the current time. When the user A boards the train T and immediately alights from the train T before the "transmission time," the user A may miss the advertising content.

In step S52, the communication unit 51 retrieves, from the storing unit 50, the advertising data related to the advertising content indicated by the content number identified in step S51. Then, the communication unit 51 transmits the retrieved advertising data and the area information indicating the display area (for example, Car 5, Door 3) to the display control device 9 of the train T as the transmission destination identified in step S51. The advertising data includes the content number identified in step S51. Thus, the communication unit 51 serves as an example of an advertising content transmission unit that transmits advertising data related to advertising content to a display control device. Consequently, the communication unit 91 of the display control device 9 receives the advertising data.

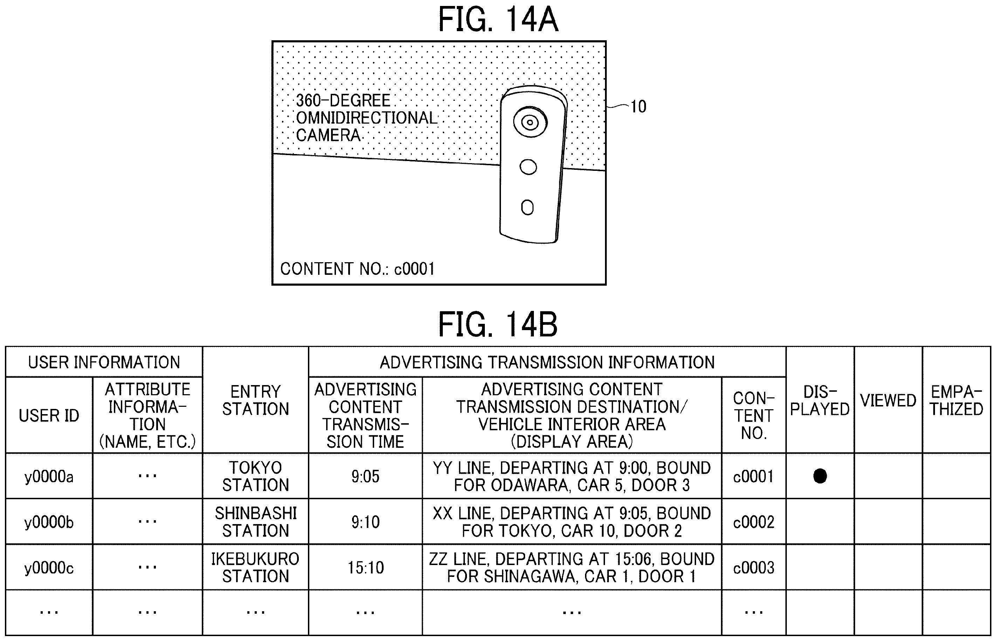

In step S53, the display control device 9 identifies the monitor 10 in the train T based on the area information (for example, Car 5, Door 3) received in step S52, and displays the advertising content indicating image(s) captured by a 360-degree omnidirectional camera on the monitor 10 as illustrated in FIG. 14A. The content number is also displayed on the monitor 10.

In step S54, the communication unit 91 transmits information indicating that the advertising content has been displayed to the advertising transmission control device 5. Consequently, the communication unit 51 of the advertising transmission control device 5 receives the information indicating that the advertising content has been displayed.

In step S55, the communication unit 51 stores additional information indicating that the advertising content has been displayed for the user ID identified in step S51 in the advertising transmission information management table as illustrated in FIG. 14B.

In step S56, the communication unit 51 transmits an advertising content viewing and empathy inquiry to the display control device 9. The advertising content viewing and empathy inquiry is an inquiry asking whether the advertising content has been viewed and whether the user has empathized with the advertising content. The inquiry includes the user ID identified in step S51. Thus, the communication unit 51 serves as an inquiry transmission unit that transmits an inquiry asking whether the user has viewed advertising content. The communication unit 51 also serves as an inquiry transmission unit that transmits an inquiry asking whether the user has empathized with advertising content. Consequently, the communication unit 91 of the advertising transmission control device 9 receives the inquiry.

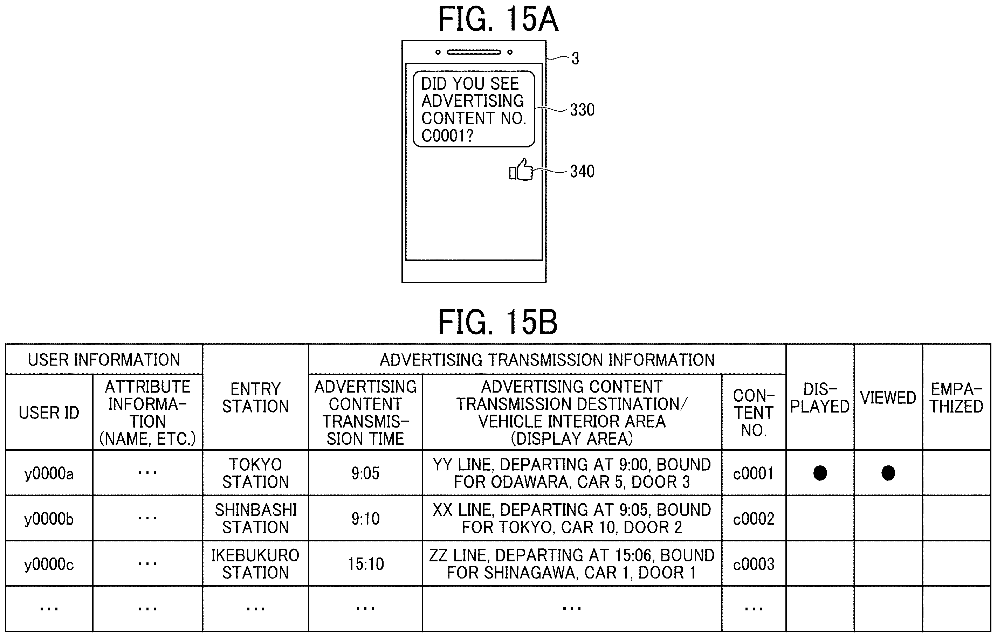

In step S57, the communication unit 91 transmits the advertising content viewing and empathy inquiry to the user terminal 3 (application) identified by the user ID received in step S56. Consequently, the communication unit 31 of the user terminal 3 receives the inquiry, and the display control unit 34 causes an inquiry screen 330 and an empathy button 340 as illustrated in FIG. 15A to be displayed on the display 311. The empathy button 340 is a so-called "Like" button or "Good" button.

When the user A views the advertising content displayed on the monitor 10 as illustrated in FIG. 1 and taps the inquiry screen 330 illustrated in FIG. 15A, in step S58, the reception unit 32 receives information indicating that the advertising content has been viewed. Then, the communication unit 31 transmits a response indicating that the advertising content has been viewed to the display control device 9. Consequently, the communication unit 91 of the display control device 9 receives the response indicating that the advertising content has been viewed.

In step S59, the communication unit 91 of the display control device 9 transmits the response indicating that the advertising content has been viewed as a response to the inquiry transmitted in step S56. Consequently, the communication unit 51 of the advertising transmission control device 5 receives the response indicating that the advertising content has been viewed.

In step S60, the communication unit 51 stores additional information indicating that the advertising content has been viewed for the user ID corresponding to the user A identified in step S51 in the advertising transmission information management table as illustrated in FIG. 15B.

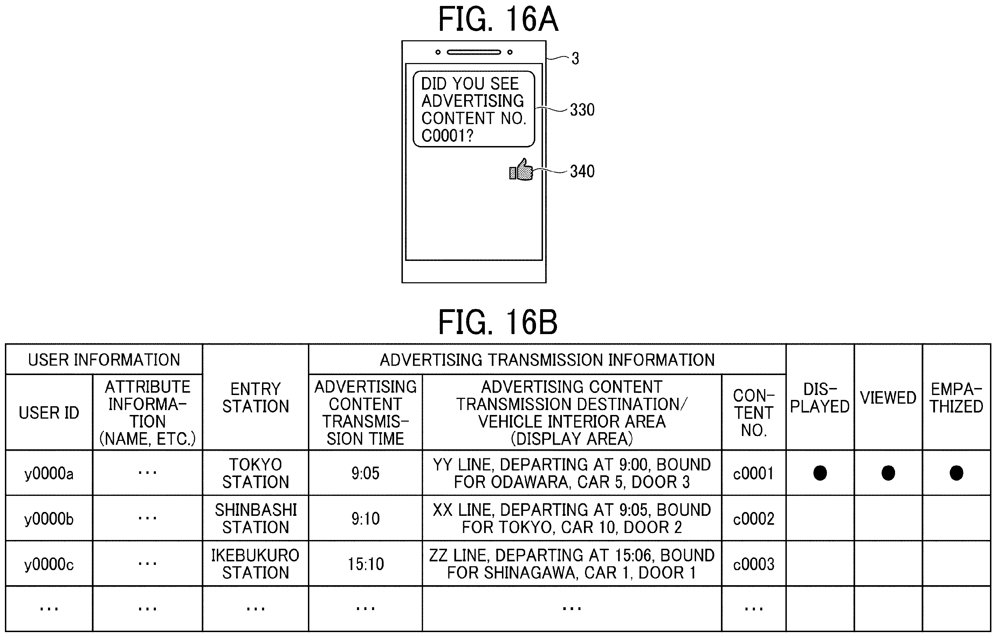

When the user A views the advertising content displayed on the monitor 10 as illustrated in FIG. 1 and taps the empathy button 340 as illustrated in FIG. 16A, in step S61, the reception unit 32 receives information indicating that the user A has empathized with the advertising content. Then, the communication unit 31 transmits a response indicating that the user A has empathized with the advertising content to the display control device 9. Consequently, the communication unit 91 of the display control device 9 receives the response indicating that the user A has empathized with the advertising content.

In step S62, the communication unit 91 of the display control device 9 transmits the response indicating that the user A has empathized with the advertising content as a response to the inquiry transmitted in step S56. Consequently, the communication unit 51 of the advertising transmission control device 5 receives the response indicating that the user A has empathized with the advertising content.

In step S63, the communication unit 51 stores additional information indicating that the user A has empathized with the advertising content for the user ID corresponding to the user A identified in step S51 in the advertising transmission information management table as illustrated in FIG. 16B.

### <Performance Management Process>

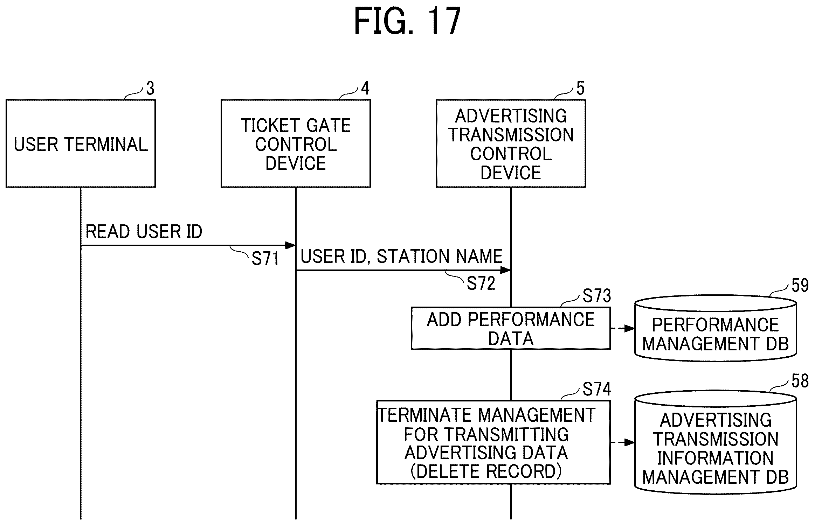

Referring to FIG. 17, a description is given below of a process for the advertising transmission control device 5 to store performance data of display, viewing, and empathy in response to the user A leaving a destination station. FIG. 17 is a sequence diagram illustrating a process for the advertising transmission control device 5 to store performance data of display, viewing, and empathy of advertising content after the user A passes through the automatic ticket gate G at the destination.

When the user A holds the user terminal 3 over the automatic ticket gate G while passing through the automatic ticket gate G at the destination station, in step S71, the output unit 37 outputs the user ID of the user A through the application. Consequently, the reading unit 47 of the ticket gate control device 4 reads (acquires) the user ID.

In step S72, the communication unit 41 of the ticket gate control device 4 transmits the user ID read in step S71 to the advertising transmission control device 5 along with the information indicating the station name stored in the storing unit 40. Consequently, the communication unit 51 of the advertising transmission control device 5 receives the user ID and the information indicating the station name.

In step S73, the communication unit 51 adds the counts for each result (display status, viewing status, and empathy status) in the advertising transmission information management table illustrated in FIG. 16B to the record of the content number identified in step S51 in the performance management table illustrated in FIG. 6.

In step S74, the communication unit 51 deletes the record related to the user ID of the user who has exited the station from the advertising transmission information management table illustrated in FIG. 16B, thus terminating the management for transmitting advertising data related to advertising content with respect to the user who has passed through the automatic ticket gate G and exited the station.

Through the series of processes described above, the user A is more likely to take an interest in and view the advertising content displayed on the nearest monitor 10 in the train T, and thus the effectiveness of the advertisement in terms of return on investment is enhanced.

Further ,the performance information generation unit 55 of the advertising transmission control device 5 can generate performance information visualizing the effectiveness of the advertisement in terms of return on investment based on the data stored in the performance management DB 59.

As described above, increasing opportunities for passengers to view advertising content in a vehicle such as the train T enhances the effectiveness of advertisements in terms of return on investment in the vehicle more than before.

The above-described embodiments are illustrative and do not limit the present disclosure. Thus, numerous additional modifications and variations are possible in light of the above teachings.
(1) For example, when multiple user terminals 3 in which the application of the present embodiment is installed are present in the same area of the same vehicle, the following process may be performed.
   (1-1) The communication unit 51 of the advertising transmission control device 5 sequentially transmits advertising data related to advertising content to the display control device 9 in accordance with the boarding order of users, to cause the advertising content to be displayed on the monitor 10.
   (1-2) The communication unit 51 of the advertising transmission control device 5 transmits advertising data related to advertising content to the display control device 9 in order of users with the highest number of advertising contents that meets the conditions in step S36, to cause the advertising content to be displayed on the monitor 10.
   (1-3) The communication unit 51 of the advertising transmission control device 5 transmits advertising data related to advertising content to the display control device 9 in order of users with the highest number of responses indicating that the advertising content has been viewed in step S58 or responses indicating that the user has empathized with the advertising content in step S61, to cause the advertising content to be displayed on the monitor 10. In this case, the record is not deleted in step S74, and all the records are stored as a history.
   (1-4) The communication unit 51 of the advertising transmission control device 5 causes advertising content to be displayed on the monitor 10 through one or more of the above processes (1-1) to (1-3) for a predetermined number of user terminals 3 among the multiple user terminals 3, and directly transmits advertising data related to the advertising content to the remaining user terminals 3 to cause the advertising content to be displayed on the remaining user terminals 3.
(2) The communication unit 51 of the advertising transmission control device 5 may distribute coupons or grant points for designated services to the user terminal 3, or reduce or waive the Wi-Fi usage fee within the train T, depending on the number of responses indicating that the advertising content has been viewed in step S58 or responses indicating that the user has empathized with the advertising content in step S61.
(3) Although the train has been described as an example of public transportation vehicles, the term "train" also includes streetcars and linear motor cars. The vehicle is not limited to trains. Such vehicles include buses, taxis, monorails, cable cars, moving walkways, and waterborne vessels such as ferries. A vehicle is a space into which a user enters and moves.

The present disclosure may also be implemented in spaces within a moving body, such as waiting rooms or meeting rooms where the monitor 10 is installed.

(4) Each of the above IDs is an example of identification information.

(5) The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc-read-only memory (CD-ROM), a magnetic tape device, or a solid state memory device.

(6) Each of the above programs may be recorded on a (non-transitory) recording medium and distributed, and may also be provided via the communication network 100 such as the Internet.

(7) The CPUs 301 and 501, which function as hardware processors, may each be either a single unit or multiple units.

Any one of the above-described operations may be performed in various other ways, for example, in an order different from the one described above.

## Claims

1. An advertising transmission control device (5) for controlling transmission of advertising data related to advertising content, the device (5) comprising:
a user identification information reception unit (51) configured to receive user identification information for identifying a user, the user identification information being transmitted from a user identification information acquisition device that acquires the user identification information from a user terminal;
a vehicle identification information reception unit (51) configured to receive vehicle identification information for identifying a vehicle on which the user corresponding to the user identification information received by the user identification information reception unit (51) is located;
a user attribute information acquisition unit (51) configured to acquire user attribute information corresponding to the user identification information received by the user identification information reception unit (51) from a user information management device that stores the user identification information in association with the user attribute information indicating an attribute of the user;
a content information acquisition unit (51) configured to acquire content identification information related to the user attribute information acquired by the user attribute information acquisition unit (51), from an advertising information management device that stores the content identification information for identifying the advertising content in association with user attribute information of a target recipient for each advertising content; and
an advertising content transmission unit (51) configured to transmit the advertising data related to the advertising content to a display control device of the vehicle identified by the vehicle identification information received by the vehicle identification information reception unit (51), the advertising content being identified by the content identification information acquired by the content information acquisition unit (51).

2. The advertising transmission control device (5) according to claim 1, wherein
the vehicle identification information reception unit (51) is configured to receive area information indicating an area within the vehicle where the user corresponding to the user identification information received by the user identification information reception unit (51) is located, and
the advertising content transmission unit (51) is configured to transmit the advertising data related to the advertising content and the area information to the display control device.

3. The advertising transmission control device (5) according to claim 1, further comprising an operation information acquisition unit (51) configured to acquire operation information corresponding to the vehicle identification information received by the vehicle identification information reception unit (51) from an operation information management device that stores the vehicle identification information in association with the operation information of the vehicle,
wherein the advertising content transmission unit (51) is configured to transmit the advertising data related to the advertising content to the display control device at a transmission time based on the operation information acquired by the operation information acquisition unit (51).

4. The advertising transmission control device (5) according to claim 1, further comprising:
an inquiry transmission unit (51) configured to transmit an inquiry asking whether the user has viewed the advertising content to the user terminal identified by the user identification information received by the user identification information reception unit (51); and
a storing unit (50) configured to store, in response to a response to the inquiry from the user terminal, information indicating that the user corresponding to the user identification information has viewed the advertising content.

5. The advertising transmission control device (5) according to claim 1, further comprising:
an inquiry transmission unit (51) configured to transmit an inquiry asking whether the user has empathized with the advertising content to the user terminal identified by the user identification information received by the user identification information reception unit (51); and
a storing unit (50) configured to store, in response to a response to the inquiry from the user terminal, information indicating that the user corresponding to the user identification information has empathized with the advertising content.

6. A communication system (1), comprising:
the advertising transmission control device (5) according to any one of claims 1 to 5; and
the user terminal (3) of the user configured to communicate with the advertising transmission control device (5), the user terminal (3) being installed with an application.

7. A communication system (1), comprising:
a user terminal (3) of a user;
a display control device (9) configured to display advertising content on a display of a vehicle; and
an advertisement transmission system (2) configured to cause the display control device (9) to perform control to display the advertising content,
the advertisement transmission system (2) including:
a user information management unit (69) configured to store user identification information for identifying the user in association with user attribute information indicating an attribute of the user;
an advertising information management unit (89) configured to store content identification information for identifying the advertising content in association with user attribute information of a target recipient for each advertising content;
a user identification information reception unit (51) configured to receive the user identification information from a user information acquisition device that acquires user information;
a vehicle identification information reception unit (51) configured to receive vehicle identification information for identifying the vehicle on which the user corresponding to the user identification information received by the user identification information reception unit (51) is located;
a user attribute information acquisition unit (51) configured to acquire the user attribute information corresponding to the user identification information received by the user identification information reception unit (51) from the user information management unit (69) that stores the user identification information in association with the user attribute information for each user;
a content information acquisition unit (51) configured to acquire, from the advertising information management unit (89), the content identification information related to the user attribute information acquired by the user attribute information acquisition unit (51); and
an advertising content transmission unit (51) configured to transmit advertising data related to the advertising content to the display control device (9) of the vehicle identified by the vehicle identification information received by the vehicle identification information reception unit (51), the advertising content being identified by the content identification information acquired by the content information acquisition unit (51),
the display control device (9) including a display control unit (94) configured to display the advertising content on the display.

8. An advertising transmission control method executed by a computer that controls transmission of advertising data related to advertising content, the method comprising:
receiving (S12) user identification information for identifying a user, the user identification information being transmitted from a user identification information acquisition device that acquires the user identification information;
receiving (S32) vehicle identification information for identifying a vehicle on which the user corresponding to the user identification information is located;
acquiring (S14) user attribute information corresponding to the user identification information from a user information management device that stores the user identification information in association with the user attribute information indicating an attribute of the user;
acquiring (S37) content identification information related to the user attribute information from an advertising information management device that stores the content identification information for identifying the advertising content in association with user attribute information of a target recipient for each advertising content; and
transmitting (S52) the advertising data related to the advertising content identified by the content identification information to a display control device of the vehicle identified by the vehicle identification information.

9. A carrier medium carrying computer-readable code for controlling a computer system to carry out the method according to claim 8.
